# EUROPEAN PATENT SPECIFICATION

(11) **EP 1 971 062 B1**
(45) Date of publication and mention of the grant of the patent: **15.06.2011**
(21) Application number: 08001624.9
(22) Date of filing: 29.01.2008
(51) Int. Cl.: H04K 1/00, H04L 9/00, G06K 7/00

(54) **Electronic tag data writing method and electronic tag read/write apparatus**
Verfahren zum Schreiben von Daten auf ein elektronisches Etikett und Vorrichtung zum Lesen/Schreiben eines elektronischen Etiketts
Méthode d'écriture de données d'étiquette électronique et appareil de lecture/écriture d'étiquette électronique

(30) Priority: 13.03.2007 JP 2007063366
(43) Date of publication of application: 17.09.2008
(73) Proprietor: Hitachi, Ltd., Chiyoda-ku Tokyo 100-8280 (JP)
(72) Inventor: Tamukai, Yoshiyuki, Toyko 100-8220 (JP); Fukushima, Shinichiro, Toyko 100-8220 (JP); Kobayashi, Yuichi, Toyko 100-8220 (JP); Honzawa, Atsushi, Toyko 100-8220 (JP)
(74) Representative: Strehl Schübel-Hopf & Partner

(56) References cited:
- WO-A-2006/131861
- US-A1- 2005 123 133
- EPC GLOBAL: "Specification for RFID Air Interface. EPC (tm) Radio-Frequency Indentity Protocols Class-1 Generation-2 UHF RFID Protocol for Communications at 860 MHz - 960 MHz (Version 1.0.9)" INTERNET CITATION, [Online] 31 January 2005 (2005-01-31), XP007902164 Retrieved from the Internet: URL:http://www.epcglobalinc.org/standards/ uhfc1g2/uhfc1g2_1_0_9-standard-20050126.pd f> [retrieved on 2007-04-25]

## Description

### BACKGROUND OF THE INVENTION

The present invention relates to an electronic tag data writing method and an electronic tag data read/write apparatus used to conduct communication between a reader/writer and an electronic tag and write data into the electronic tag. In particular, the present invention relates to a masking technique in writing to the electronic tag.

Conventional writing data into the electronic tag will now be described. The electronic tag generates a random number having a fixed size, and transmits it to the reader/writer. The reader/writer conducts masking corresponding to the fixed size on write data by using the random number, and transmits the write data to the electronic tag. The electronic tag writes the received write data into a memory. This procedure is repeated until write data in the reader/writer runs out. Write data is thus written into the electronic tag (see, for example, Class 1 Generation 2 UHF Air Interface Protocol Standard Version 1 [1] . 0.9)

### SUMMARY OF THE INVENTION

For writing write data into the memory in the electronic tag, however, it is necessary, in the related art, to repeat the procedure of conducting masking on partial write data in the reader/writer, transmitting the partial write data to the electronic tag, and writing the partial write data into the memory, a plurality of times. If the electronic tag gets out of a range in which communication with the reader/writer is possible during communication, therefore, there is a risk of failing in writing.

Therefore, an object of the present invention is to provide an electronic tag data writing method and an electronic tag data read/write apparatus capable of reducing writing failures when writing data into an electronic tag.

The object is met by the method and the apparatus defined in appended claims 1 and 4. The subclaims relate to preferred modifications thereof. WO 2006/131861 A discloses a conventional method and device for secure RFID transmission. The present independent claims have been drafted in the two-part form in view of this document.

Representative aspects of examples useful to understand the present invention will now be described briefly.

An electronic tag data writing method according to one illustrative example is an electronic tag data writing method for writing write data into an electronic tag by conducting communication between a reader/writer and the electronic tag, the electronic tag data writing method including causing the reader/writer to transmit a response request to the electronic tag, causing the electronic tag to receive the response request from the reader/writer, generate and store a random number, and transmit the generated random number to the reader/writer, causing the reader/writer to conduct masking processing on the write data on the basis of the random number every size of the received random number (for the respective length of the received random number), repeat the masking processing until all of the write data are subjected to masking processing, and then transmit the masked write data to the electronic tag collectively, and causing the electronic tag to conduct deciphering processing on the received masked write data every size of the random number, repeat the deciphering processing until all of the masked write data are deciphered, and write the write data into a memory.

An electronic tag data writing method according to another illustrative example is an electronic tag data writing method for writing write data into an electronic tag by conducting communication between a reader/writer and the electronic tag, the electronic tag data writing method including causing the reader/writer to transmit a response request to the electronic tag, causing the electronic tag to receive the response request from the reader/writer, generate and store a first random number, and transmit the generated first random number to the reader/writer, causing the reader/writer to generate a second random number by using the received first random number as an initial value, conduct masking processing on the write data on the basis of the second random number every size of the generated second random number, repeat the masking processing until all of the write data are masked, and then transmit the masked write data to the electronic tag collectively, and causing the electronic tag to generate the second random number by using the stored first random number as an initial value, conduct deciphering processing on the received masked write data every size of the second random number, repeat the deciphering processing until all of the masked write data are deciphered, and write the write data into a memory.

An electronic tag data read/write apparatus according to a further illustrative example is an electronic tag data read/write apparatus which writes write data into an electronic tag by conducting communication between a reader/writer and the electronic tag, the electronic tag data read/write apparatus including the electronic tag having a memory and a random number generator, and the reader/writer having an antenna to conduct communication, wherein the reader/writer transmits a response request to the electronic tag, the electronic tag receives the response request from the reader/writer, generates a random number in the random number generator, stores the random number in the memory, and transmits the generated random number to the reader/writer, the reader/writer conducts masking processing on the write data on the basis of the random number every size of the received random number, repeats the masking processing until all of the write data are subjected to masking processing, and then transmits the masked write data to the electronic tag collectively, and the electronic tag conducts deciphering processing on the received masked write data every size of the random number stored in the memory, repeats the deciphering processing until all of the masked write data are deciphered, and writes the write data into the memory.

An electronic tag data read/write apparatus according to a still further illustrative example is an electronic tag data read/write apparatus which writes write data into an electronic tag by conducting communication between a reader/writer and the electronic tag, the electronic tag data read/write apparatus including the electronic tag having a memory and a first random number generator, and the reader/writer having an antenna to conduct communication and having a second random number generator, wherein the reader/writer transmits a response request to the electronic tag, the electronic tag receives the response request from the reader/writer, generates a first random number in the first random number generator, stores the first random number in the memory, and transmits the generated first random number to the reader/writer, the reader/writer generates a second random number in the second random number generator by using the received first random number as an initial value, conducts masking processing on the write data on the basis of the second random number every size of the generated second random number, repeats the masking processing until all of the write data are subjected to masking processing, and then transmits the masked write data to the electronic tag collectively, and the electronic tag generates the second random number in the first random number generator by using the stored first random number as an initial value, conducts deciphering processing on the received masked write data every size of the second random number, repeats the deciphering processing until all of the masked write data are deciphered, and writes the write data into the memory.

Effects obtained by the present invention will now be described briefly.

According to the present invention, it becomes unnecessary to conduct communication between the reader/writer and the electronic tag a plurality of times, and failures such as incomplete writing into the electronic tag are prevented.

Other objects, features and advantages of the invention will become apparent from the following description of illustrative examples and the embodiment of the invention taken in conjunction with the accompanying drawings.

### BRIEF DESCRIPTION OF THE DRAWINGS

FIG. 1 is a configuration diagram showing an electronic tag data read/write apparatus according to a first example useful to understand the present invention;
FIG. 2 is a flow chart showing operation of the electronic tag data read/write apparatus according to the first example;
FIG. 3 is a diagram showing an example of a random number used in the electronic tag data read/write apparatus according to the first example;
FIG. 4 is an explanation diagram for explaining write data masking in the electronic tag data read/write apparatus according to the first example;
FIG. 5 is an explanation diagram for explaining write data decipherment in the electronic tag data read/write apparatus according to the first example;
FIG. 6 is a configuration diagram showing an electronic tag data read/write apparatus according to a second example useful to understand the present invention;
FIG. 7 is a flow chart showing operation of the electronic tag data read/write apparatus according to the second example;
FIG. 8 is a diagram showing an example of a random number used in the electronic tag data read/write apparatus according to the second example;
FIG. 9 is an explanation diagram for explaining write data masking in the electronic tag data read/write apparatus according to the second example;
FIG. 10 is an explanation diagram for explaining write data decipherment in the electronic tag data read/write apparatus according to the second example;
FIG. 11 is a flow chart showing operation of the electronic tag data read/write apparatus according to an embodiment of the present invention;
FIG. 12 is a diagram showing an example of a random number used in the electronic tag data read/write apparatus according to the embodiment;
FIG. 13 is an explanation diagram for explaining masking of write data in the electronic tag data read/write apparatus according to the embodiment; and
FIG. 14 is an explanation diagram for explaining decipherment of write data in the electronic tag data read/write apparatus according to the second example.

### DETAILED DESCRIPTION OF THE EMBODIMENTS

Hereafter, illustrative examples and the embodiment of the present invention will be described in detail with reference to the drawings. Throughout all drawings for explaining the examples and embodiment, the same members are denoted in principle by like characters and repetitive explanation thereof will be omitted.

### (First Example)

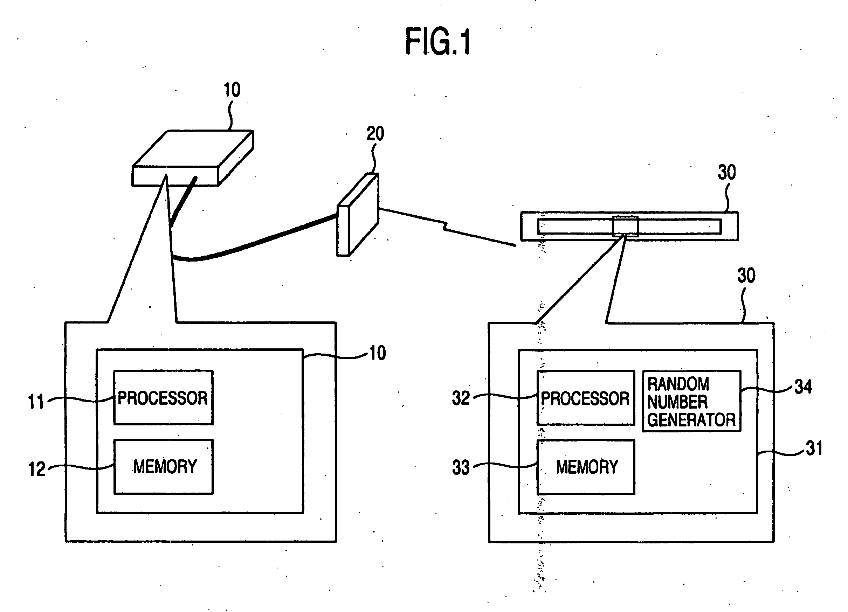

A configuration of an electronic tag data read/write apparatus according to a first example useful to understand the present invention will now be described with reference to FIG. 1. FIG. 1 is a configuration diagram showing the configuration of the electronic tag data read/write apparatus according to the first example.

In FIG. 1, the electronic tag data read/write apparatus includes a reader/writer 10 and an electronic tag 30.

At least one antenna 20 is connected to the reader/writer 10 to make communication with the electronic tag 30 possible. The reader/writer 10 and the electronic tag 30 execute processing in the present example by conducting wireless communication.

The reader/writer 10 includes a processor 11 and a memory 12. The reader/writer 10 is a device which transmits and receives instructions and data by using the antenna 20.

The electronic tag 30 has a processor 32, a memory 33 and a random number generator 34 on an IC chip 31. The electronic tag 30 is a device which operates in a range where communication with the reader/writer 10 is possible, conducts processing in accordance with a received instruction, and transmits a result.

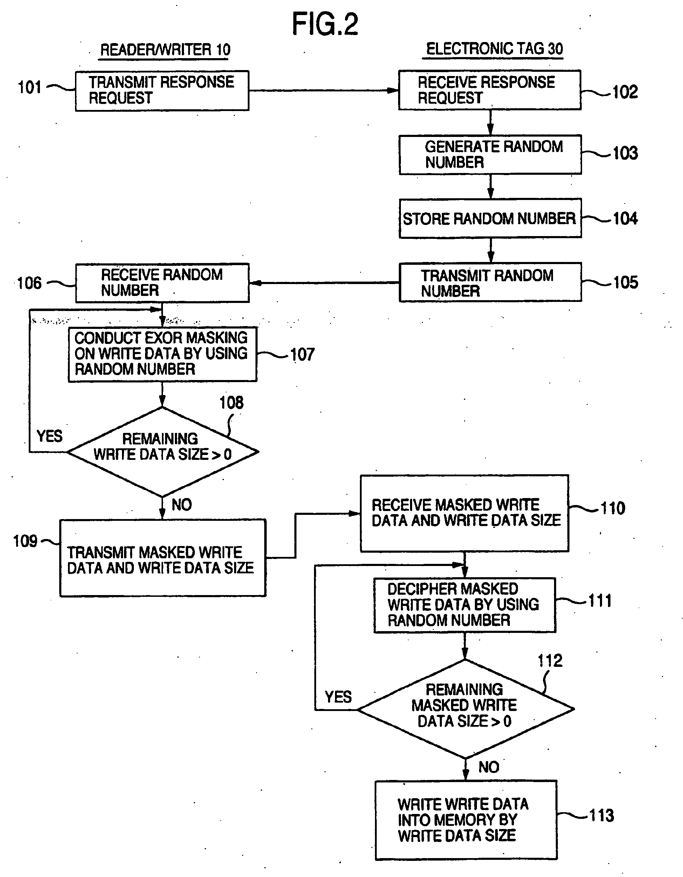

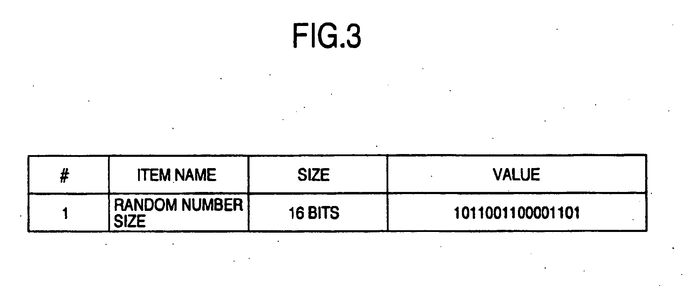

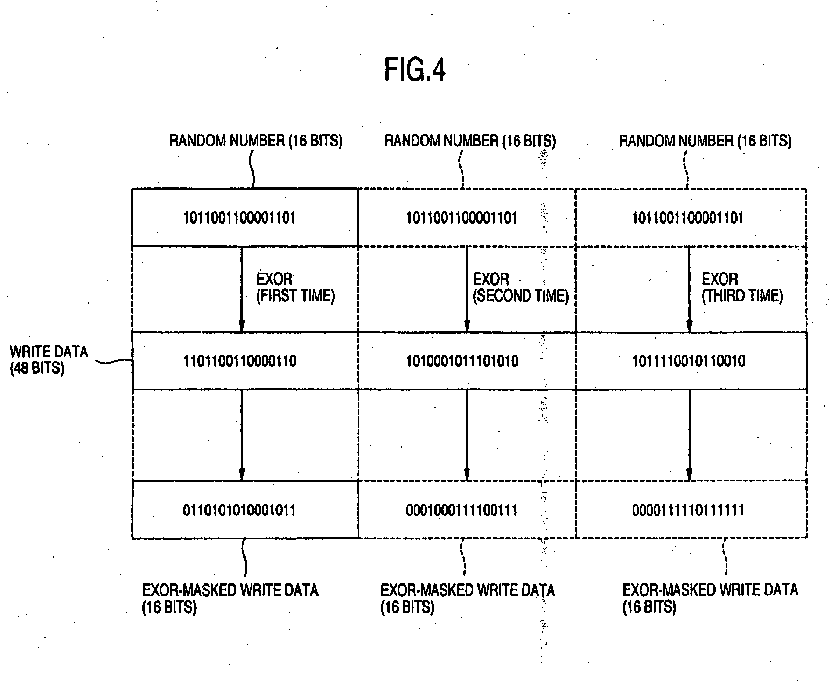

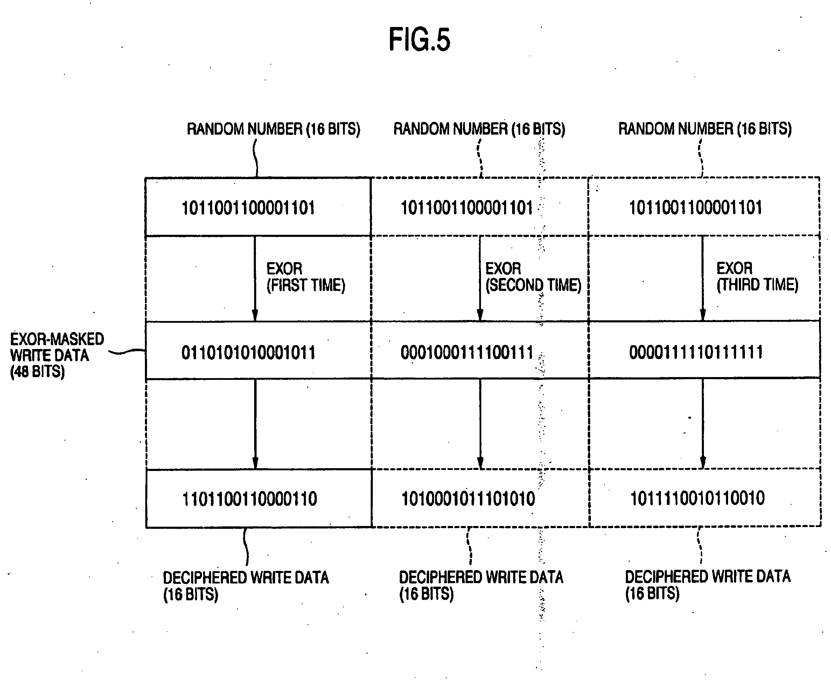

Operation using an electronic tag data writing method for the electronic tag data read/write apparatus according to the first example will now be described with reference to FIGS. 2 to 5. FIG. 2 is a flow chart showing operation of the electronic tag data read/write apparatus according to the first example. FIG. 3 is a diagram showing an example of a random number used in the electronic tag data read/write apparatus according to the first example. FIG. 4 is an explanation diagram for explaining write data masking in the electronic tag data read/write apparatus according to the first example. FIG. 5 is an explanation diagram for explaining write data decipherment in the electronic tag data read/write apparatus according to the first example.

First, at step 101, the reader/writer 10 transmits a response request.

Subsequently, at step 102, the electronic tag 30 which is in a range where communication with the reader/writer 10 is possible receives the response request.

Subsequently, at step 103, the electronic tag 30 generates a random number in the random number generator 34.

It is supposed that the size of the generated random number is defined in specifications of the reader/writer 10 and the electronic tag 30. In the present example, the random number size of the reader/writer 10 and the electronic tag 30 becomes 16 bits as shown in FIG. 3. For example, therefore, a random number "1011001100001101" is generated.

Subsequently, at step 104, the electronic tag 30 stores the random number generated at the step 103.

Subsequently, at step 105, the electronic tag 30 transmits the random number generated at the step 103 to the reader/writer 10.

Subsequently, at step 106, the reader/writer 10 receives the random number generated at the step 103.

Subsequently, at step 107, the reader/writer 10 uses the random number received at the step 106 and conducts EXOR (exclusive OR) masking on write data by the random number size.

In the present example, the random number size of the reader/writer 10 and the electronic tag 30 becomes 16 bits. For example, as shown in FIG. 4, therefore, the reader/writer 10 performs an EXOR-ing function to combine a random number formed of 16 bits with write data formed of 48 bits "110110011000011010100010111010101011110010110010."

If there is still write data which is not yet subjected to the EXOR masking at step 108, processing is started again from the step 107.

If all write data are subjected to EXOR masking, processing at step 109 is started.

In the present example, the random number size of the reader/writer 10 and the electronic tag 30 becomes 16 bits. For example, therefore, in the case of write data (48 bits) as shown in FIG. 4, the processing at the step 107 is conducted three times.
As a result, "011010101000101100010001111001110000111110111111" is generated as write data subjected to EXOR masking.

Subsequently, at the step 109, the reader/writer 10 transmits the write data subjected to the EXOR masking at the step 107 and its data size to the electronic tag 30.

Subsequently, at step 110, the electronic tag 30 receives the EXOR-masked write data and its data size transmitted at the step 109.

Subsequently, at step 111, for example, as shown in FIG. 5, the electronic tag 30 performs an EXOR-ing function to combine the random number "1011001100001101" stored at the step 104 with the EXOR-masked write data received at the step 110 in the range of the size of the random number from the head bit, and deciphers the write data.

In the present example, the random number size of the reader/writer 10 and the electronic tag 30 becomes 16 bits. For example as shown in FIG. 5,, therefore, the electronic tag 30 performs an EXOR-ing function to combine only 16 bits ranging from the head in the EXOR-masked write data (48 bits) "011010101000101100010001111001110000111110111111" with the random number.

If at step 112 there is still EXOR-masked write data received by the electronic tag at the step 110, processing is started from the step 111.

If all EXOR-masked write data are deciphered, processing at step 113 is started.

In the present example, the random number size of the reader/writer 10 and the electronic tag 30 becomes 16 bits. For example, therefore, in the case of EXOR-masked write data (48 bits) shown in FIG. 5 "011010101000101100010001111001110000111110111111," the processing at the step 111 is conducted three times.

Subsequently, at the step 113, the electronic tag 30 writes the write data deciphered at the step 111 into the memory 33 by the write data size received at the step 110.

As shown in FIG. 5, in the present example, the deciphered write data is "110110011000011010100010111010101011110010110010" and the received write data size is 48 bits. Therefore, the electronic tag 30 writes, for example, "110110011000011010100010111010101011110010110010" into the memory 33.

In the present example, the reader/writer 10 generates all EXOR-masked write data and then transmits the EXOR-masked write data to the electronic tag 30. Therefore, it is possible to eliminate failures such as incomplete writing into the electronic tag.

### (Second Example)

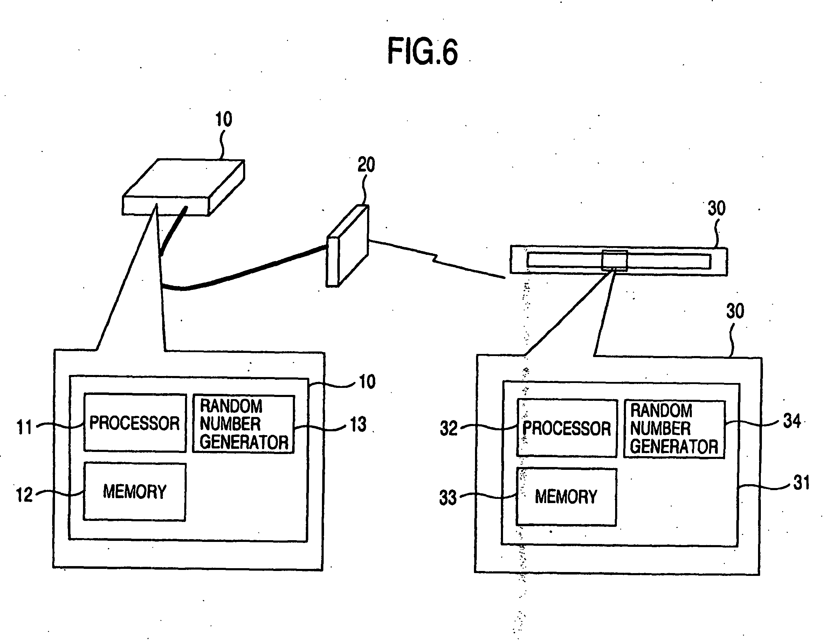

A configuration of an electronic tag data read/write apparatus according to a second example useful to understand the present invention will now be described with reference to FIG. 6. FIG. 6 is a configuration diagram showing the configuration of the electronic tag data read/write apparatus according to the second example.

In FIG. 6, the configuration is the same as that in the first embodiment except that a random number generator 13 is added to the reader writer 10.

The random number generator 13 in the reader writer 10 and the random number generator 34 in the electronic tag are configured so as to output the same random number when given the same data as an initial value (seed or seed value). For example, if the same 8-bit data is given as the initial value (seed), the same 16 bit data is generated as the random number.

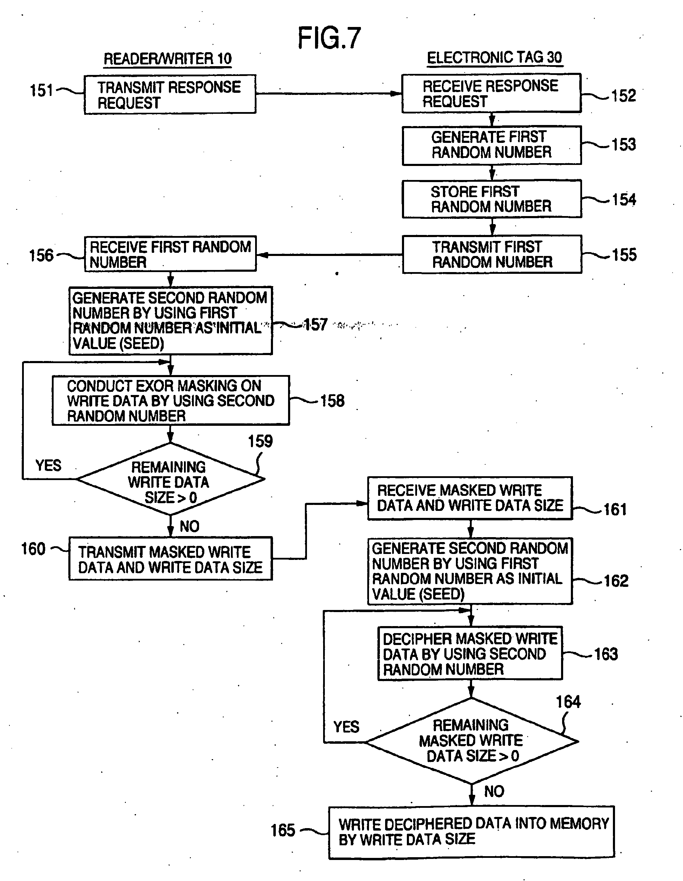

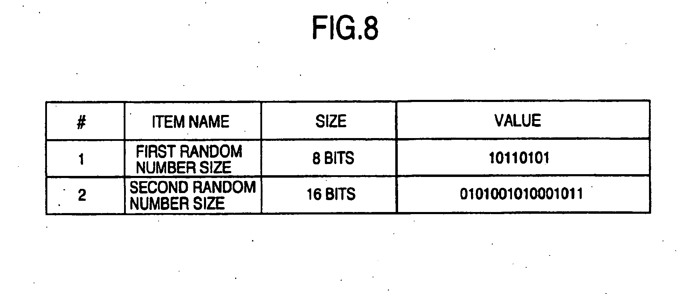

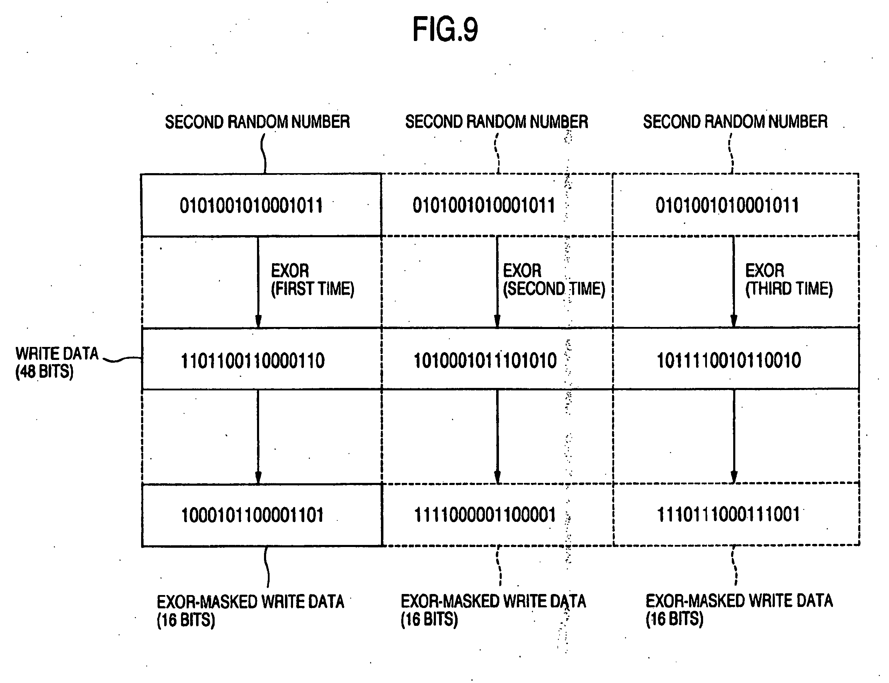

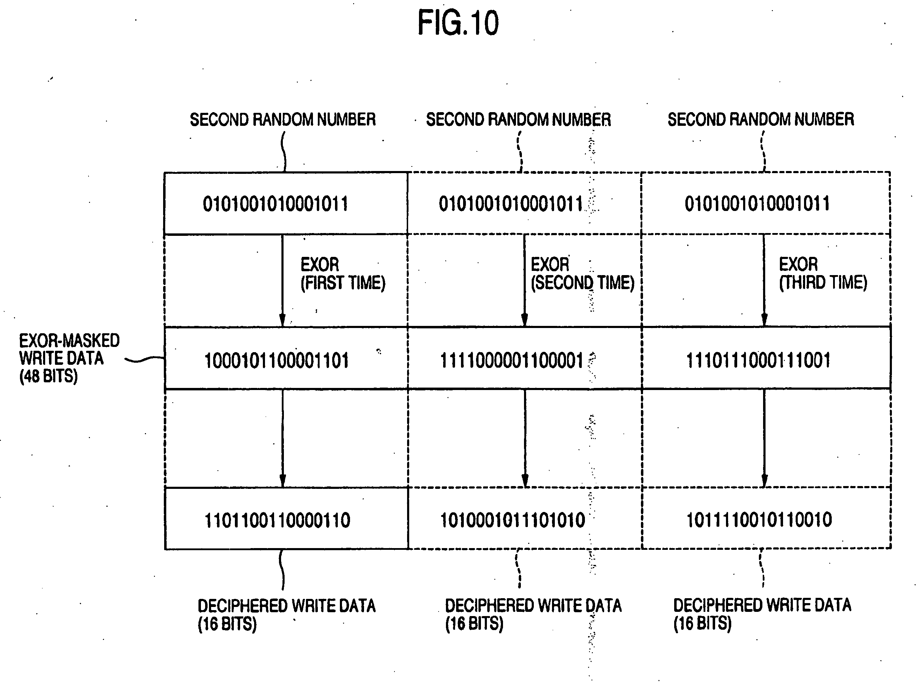

Operation using an electronic tag data writing method for the electronic tag data read/write apparatus according to the second example will now be described with reference to FIGS. 7 to 10. FIG. 7 is a flow chart showing operation of the electronic tag data read/write apparatus according to the second example. FIG. 8 is a diagram showing an example of a random number used in the electronic tag data read/write apparatus according to the second example. FIG. 9 is an explanation diagram for explaining write data masking in the electronic tag data read/write apparatus according to the second example. FIG. 10 is an explanation diagram for explaining write data decipherment in the electronic tag data read/write apparatus according to the second example.

First, at step 151, the reader/writer 10 transmits a response request.

Subsequently, at step 152, the electronic tag 30 which is in a range where communication with the reader/writer 10 is possible receives the response request.

Subsequently, at step 153, the electronic tag 30 generates a first random number in the random number generator 34. It is supposed that the size of the generated first random number is defined in specifications of the reader/writer 10 and the electronic tag 30.

In the present example, the size of the first random number in the reader/writer 10 and the electronic tag 30 becomes 8 bits as shown in FIG. 8. For example, therefore, a random number "10110101" is generated.

Subsequently, at step 154, the electronic tag 30 stores the first random number generated at the step 153 into the memory 33.

Subsequently, at step 155, the electronic tag 30 transmits the first random number generated at the step 153 to the reader/writer 10.

Subsequently, at step 156, the reader/writer 10 receives the first random number generated at the step 153.

Subsequently, at step 157, the reader/writer 10 generates a second random number in the random number generator 13 by using the first random number received at the step 156 as an initial value (seed).

The random number generator 13 and the random number generator 34 perform the same operation. If the same initial value (seed) is set as described above, therefore, a random number generated thereafter becomes quite the same.

In the present example, the size of the second random number in the reader/writer 10 and the electronic tag 30 becomes 16 bits as shown in FIG. 8. For example, therefore, the reader/writer 10 generates a second random number "0101001010001011."

Subsequently, at step 158, the reader/writer 10 performs EXOR masking on write data by the size of the second random number by using the second random number generated at the step 157.

In the present example, the size of the second random number in the reader/writer 10 and the electronic tag 30 becomes 16 bits. For example, as shown in FIG. 9, therefore, the reader/writer 10 performs an EXOR-ing function to combine "1101100110000110" obtained by extracting 16 bits beginning with the head from the write data "110110011000011010100010111010101011110010110010" with the second random number "0101001010001011." As a result, EXOR-masked write data "1000101100001101" is generated.

If at step 159 there is still write data which is not subjected to the EXOR masking, the reader/writer 10 starts processing from the step 158 again. If all write data are subjected to EXOR masking, the reader/writer 10 starts processing to be conducted at step 160.

In the present example, the size of the second random number in the reader/writer 10 and the electronic tag 30 becomes 16 bits. For example, therefore, in the case of write data (48 bits) as shown in FIG. 9, the processing at the step 158 is conducted three times.

Subsequently, at the step 160, the reader/writer 10 transmits the write data subjected to the EXOR masking at the step 158 and its data size to the electronic tag 30.

Subsequently, at step 161, the electronic tag 30 receives the EXOR-masked write data and its data size transmitted at the step 160.

Subsequently, at step 162, the electronic tag 30 generates the second random number in the random number generator 34 by using the first random number stored in the memory 33 at the step 154 as an initial value (seed).

In the present example, the size of the second random number in the reader/writer 10 and the electronic tag 30 becomes 16 bits as shown in FIG. 8. For example, therefore, the electronic tag 30 generates a second random number "0101001010001011."

Subsequently, at step 163, the electronic tag 30 performs an EXOR function to combine the second random number generated at the step 162 with the EXOR-masked write data received at the step 161 in the range of the size of the second random number from the head bit, and deciphers the write data.

In the present example, the size of the second random number in the reader/writer 10 and the electronic tag 30 becomes 16 bits. For example, as shown in FIG. 10, therefore, the electronic tag 30 performs an EXOR-ing function to combine the second random number "0101001010001011" with "1000101100001101" which is obtained by extracting 16 bits beginning with the head from the EXOR-masked write data. As a result, deciphered write data "1101100110000110" is generated.

If at step 164 there is still EXOR-masked write data, the electronic tag 30 starts processing from the step 163 again.

If all EXOR-masked write data are deciphered, the electronic tag 30 starts processing to be conducted at step 165.

In the present example, the size of the second random number in the reader/writer 10 and the electronic tag 30 becomes 16 bits. For example, therefore, in the case of EXOR-masked write data (48 bits) as shown in FIG. 10, the processing at the step 163 is conducted three times.

Subsequently, at the step 165, the electronic tag 30 writes the write data deciphered at the step 163 into the memory 33 by the write data size received at the step 161.

As shown in FIG. 10, in the present example, the deciphered write data is "110110011000011010100010111010101011110010110010" and the received write data size is 48 bits. Therefore, the electronic tag 30 writes, for example, "110110011000011010100010111010101011110010110010" into the memory 33.

In the present example, the electronic tag 30 repeats the processing of deciphering the EXOR-masked write data by the size of the second random number and writes the deciphered write data into the memory 33 after all write data are deciphered. Alternatively, the electronic tag 30 may decipher the EXOR-masked write data by the size of the second random number, write the deciphered write data into the memory 33 successively, and execute the processing until the EXOR-masked write data runs out.

In the present example, the reader/writer generates all EXOR-masked write data and then transmits the EXOR-masked write data to the electronic tag. Therefore, failures such as incomplete writing into the electronic tag can be prevented. In addition, the random number transmitted between the reader/writer 10 and the electronic tag 30 is only the first random number, and it is not the random number used when masking the write data. Therefore, data can be written more safely.

### (Embodiment)

The present embodiment of the invention is obtained from the second example by conducting generation of the second random number a plurality of times. The electronic tag read/write apparatus has a configuration similar to that in the second example.

The random number generator 13 in the reader writer 10 and the random number generator 34 in the electronic tag are configured so as to output the same random number when given the same data as an initial value (seed). For example, if the same 8-bit data is given as the initial value (seed), the same 16 bit data is generated as the random number.

The random number generator 13 in the reader writer 10 and the random number generator 34 in the electronic tag generate a random number which is different every time. However, the same random number is generated in the random number generator 13 and the random number generator 34 every time.

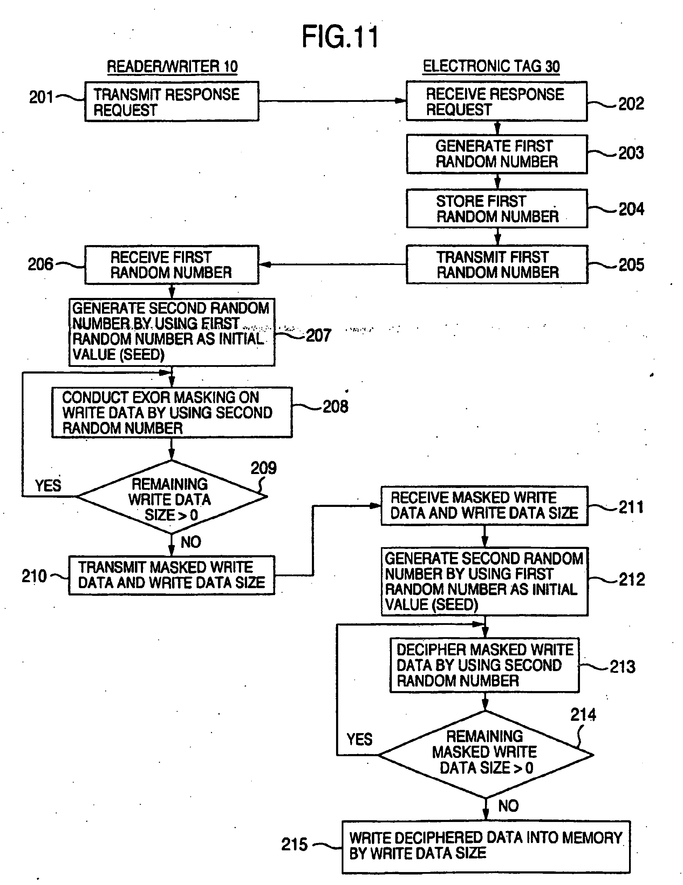

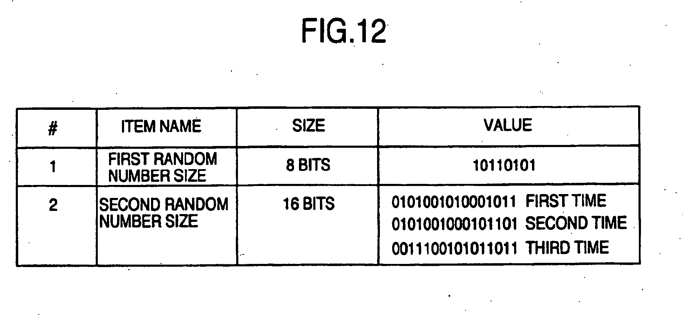

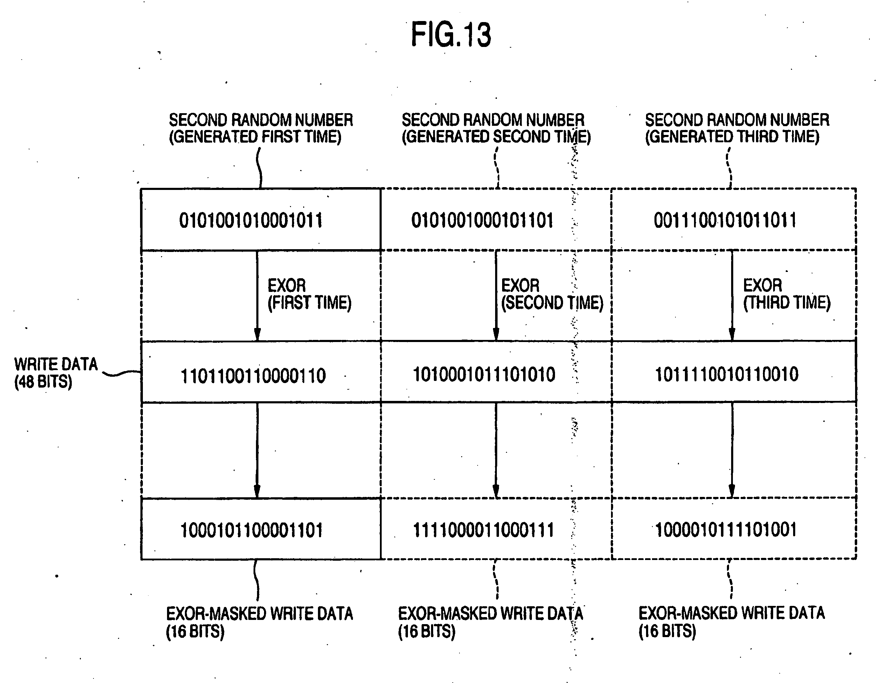

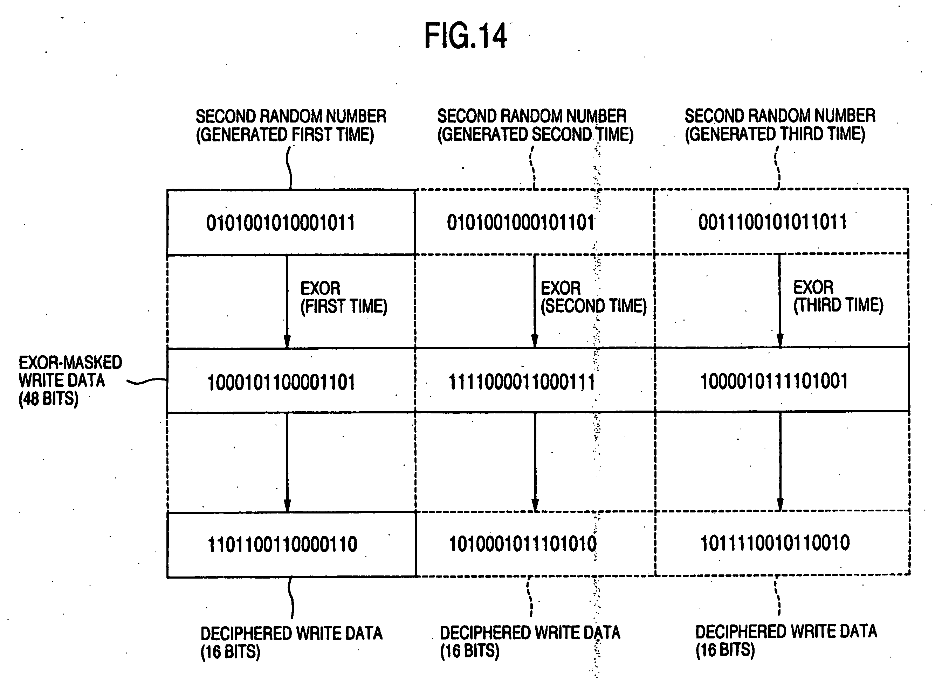

Operation using an electronic tag data writing method for the electronic tag data read/write apparatus according to the embodiment of the present invention will now be described with reference to FIGS. 11 to 14. FIG. 11 is a flow chart showing operation of the electronic tag data read/write apparatus according to the embodiment. FIG. 12 is a diagram showing an example of a random number used in the electronic tag data read/write apparatus according to the embodiment. FIG. 13 is an explanation diagram for explaining write data masking in the electronic tag data read/write apparatus according to the embodiment. FIG. 14 is an explanation diagram for explaining write data decipherment in the electronic tag data read/write apparatus according to the embodiment.

First, at step 201, the reader/writer 10 transmits a response request.

Subsequently, at step 202, the electronic tag 30 which is in a range where communication with the reader/writer 10 is possible receives the response request.

Subsequently, at step 203, the electronic tag 30 generates a first random number in the random number generator 34.

It is supposed that the size of the generated first random number is defined in specifications of the reader/writer 10 and the electronic tag 30.

In the present embodiment, the size of the first random number in the reader/writer 10 and the electronic tag 30 becomes 8 bits as shown in FIG. 12. For example, therefore, a random number "10110101" is generated.

Subsequently, at step 204, the electronic tag 30 stores the first random number generated at the step 203 into the memory 33.

Subsequently, at step 205, the electronic tag 30 transmits the first random number generated at the step 203 to the reader/writer 10.

Subsequently, at step 206, the reader/writer 10 receives the first random number generated at the step 203.

Subsequently, at step 207, the reader/writer 10 generates a second random number in the random number generator 13 by using the first random number received at the step 206 as an initial value (seed). The random number generator 13 and the random number generator 34 perform the same operation as described above. If the same initial value (seed) is set, therefore, a random number generated thereafter becomes quite the same.

In the present embodiment, the size of the second random number in the reader/writer 10 and the electronic tag 30 becomes 16 bits as shown in FIG. 12. For example, therefore, the reader/writer 10 generates a second random number "0101001010001011."

Subsequently, at step 208, the reader/writer 10 performs EXOR masking on write data by the size of the second random number by using the second random number generated at the step 207.

In the present embodiment, the size of the second random number in the reader/writer 10 and the electronic tag 30 becomes 16 bits. For example, as shown in FIG. 13, therefore, the reader/writer 10 performs an EXOR-ing function to combine "1101100110000110" obtained by extracting 16 bits beginning with the head from the write data with the second random number "0101001010001011." As a result, EXOR-masked write data "1000101100001101" is generated.

If at step 209 there is still write data which is not subjected to the EXOR masking, the reader/writer 10 starts processing from the step 207 again. If all write data are subjected to EXOR masking, the reader/writer 10 starts processing to be conducted at step 210.

In the present embodiment, the size of the second random number in the reader/writer 10 and the electronic tag 30 becomes 16 bits. For example, therefore, in the case of write data (48 bits) as shown in FIG. 13, the processing at the step 207 and the step 208 is conducted three times. By the way, if the processing at the step 207 is conducted again, the second random number assumes a value different from that at the last time as shown in FIG. 13.

Subsequently, at the step 210, the reader/writer 10 transmits the write data subjected to the EXOR masking at the step 208 and its data size to the electronic tag 30.

Subsequently, at step 211, the electronic tag 30 receives the EXOR-masked write data and its data size transmitted at the step 210.

Subsequently, at step 212, the electronic tag 30 generates the second random number in the random number generator 34 by using the first random number stored in the memory 33 at the step 204 as an initial value (seed).

In the present embodiment, the size of the second random number in the reader/writer 10 and the electronic tag 30 becomes 16 bits as shown in FIG. 14. For example, therefore, the electronic tag 30 generates a second random number "0101001010001011."

Subsequently, at step 213, the electronic tag 30 performs an EXOR function to combine the second random number generated at the step 212 with the EXOR-masked write data received at the step 211 in the range of the size of the second random number from the head bit, and deciphers the write data.

In the present embodiment, the size of the second random number in the reader/writer 10 and the electronic tag 30 becomes 16 bits. For example, as shown in FIG. 14, therefore, the electronic tag 30 performs an EXOR-ing function to combine the second random number "0101001010001011" with "1000101100001101" which is obtained by extracting 16 bits beginning with the head from the EXOR-masked write data. As a result, deciphered write data "1101100110000110" is generated.

If at step 214 there is still EXOR-masked write data, the electronic tag 30 starts processing from the step 212 again. If all EXOR-masked write data are deciphered, the electronic tag 30 starts processing to be conducted at step 215.

In the present embodiment, the size of the second random number in the reader/writer 10 and the electronic tag 30 becomes 16 bits. For example, therefore, in the case of EXOR-masked write data (48 bits) as shown in FIG. 14, the processing at the step 212 and the step 213 is conducted three times. By the way, if the processing at the step 212 is conducted again, the second random number assumes a value different from that at the last time.

Subsequently, at the step 215, the electronic tag 30 writes the write data deciphered at the step 213 into the memory 33 by the write data size received at the step 211.

In the present embodiment, the deciphered write data is "110110011000011010100010111010101011110010110010" and the received write data size is 48 bits. Therefore, the electronic tag 30 writes, for example, "110110011000011010100010111010101011110010110010" into the memory 33.

In the present embodiment, the electronic tag 30 repeats the processing of deciphering the EXOR-masked write data by the size of the second random number and writes the deciphered write data into the memory 33 after all write data are deciphered. Alternatively, the electronic tag 30 may decipher the EXOR-masked write data by the size of the second random number, write the deciphered write data into the memory 33 successively, and execute the processing until the EXOR-masked write data runs out.

In the present embodiment, the reader/writer 10 generates all EXOR-masked write data and then transmits the EXOR-masked write data to the electronic tag 30. Therefore, it is possible to eliminate failures such as incomplete writing into the electronic tag. In addition, the random number transmitted between the reader/writer 10 and the electronic tag 30 is only the first random number, and it is not a random number used when actually masking the write data. Therefore, data can be written more safely.

Heretofore, the present invention has been described concretely with reference to the embodiment. However, it is a matter of course that the present invention is not restricted to the embodiment, but various changes can be made without departing from the scope of the invention as defined in the claims.

For example, although EXOR is used as the mask for write data in the embodiment, other masks may also be used.

Although the method using an electric wave is described in the embodiment, different means which makes possible wireless communication between the reader/writer 10 and the electronic tag 30, such as electromagnetic induction, may also be adopted.

The present invention relates to an electronic tag data writing method and an electronic tag data read/write apparatus used to conduct communication between a reader/writer and an electronic tag and write data into the electronic tag. The present invention can be applied to a read/write apparatus which conducts masking when writing to the electronic tag.

It should be further understood by those skilled in the art that although the foregoing description has been made on an embodiment of the invention, the invention is not limited thereto and various changes and modifications may be made without departing from the scope of the appended claims.

## Claims

1. An electronic tag data writing method for writing write data into an electronic tag (30) by conducting communication between a reader/writer (10) and the electronic tag, the electronic tag data writing method comprising the steps of:
causing the reader/writer to transmit a response request to the electronic tag (201);
causing the electronic tag to receive the response request from the reader/writer (202), generate (203) and store a first random number (204), and transmit the generated first random number to the reader/writer (205);
causing the reader/writer to generate a second random number by using the received first random number as an initial value (207), conduct masking processing on the write data on the basis of the second random number for the respective length of the generated second random number (208), repeat the masking processing until all of the write data are masked (209), and then transmit the masked write data to the electronic tag collectively (210); and
causing the electronic tag to generate the same second random number as the reader/writer by using the stored first random number as an initial value (212), conduct deciphering processing on the received masked write data for the respective length of the second random number (213), repeat the deciphering processing until all of the masked write data are deciphered (214), and write the write data into a memory (33) (215),
**characterised in that**
when causing the reader/writer to repeat the masking processing, the reader/writer generates a second random number which is different every time by using the first random number as an initial value and conducts the masking processing, and
when causing the electronic tag to repeat the deciphering processing, the electronic tag generates the same second random number as the reader/writer which is different every time by using the first random number as an initial value and conducts the deciphering processing.

2. The method of claim 1, wherein the masking processing and the deciphering processing are conducted by performing EXOR operations.

3. The method of claim or 2, wherein communication between the reader/writer and the electronic tag is wireless communication using electric waves or wireless communication using electromagnetic induction.

4. An electronic tag data read/write system adapted to write write data into an electronic tag (30) by conducting communication between a reader/writer (10) and the electronic tag, the electronic tag data read/write system comprising:
the electronic tag having a memory (33) and a first random number generator (34); and
the reader/writer having an antenna (20) to conduct communication and having a second random number generator (13),
wherein
the reader/writer is adapted to transmit a response request to the electronic tag (201),
the electronic tag is adapted to receive the response request from the reader/writer (202), generate a first random number (203) in the first random number generator, store the first random number in the memory (204), and transmit the generated first random number to the reader/writer (205),
the reader/writer is adapted to generate a second random number in the second random number generator by using the received first random number as an initial value (207), conduct masking processing on the write data on the basis of the second random number for the respective length of the generated second random number (208), repeat the masking processing until all of the write data are subjected to masking processing (209), and then transmit the masked write data to the electronic tag collectively (210); and
the electronic tag is adapted to generate the same second random number in the first random number generator as the reader/writer by using the stored first random number as an initial value (212), conduct deciphering processing on the received masked write data for the respective length of the second random number (213), repeat the deciphering processing until all of the masked write data are deciphered (214), and write the write data into the memory (215),
**characterised in that**
when repeating the masking processing, the reader/writer is adapted to generate a second random number which is different every time by using the first random number as an initial value and conduct the masking processing, and
when repeating the deciphering processing, the electronic tag is adapted to generate the same second random number as the reader/writer which is different every time by using the first random number as an initial value and conduct the deciphering processing.

5. The system of claim 4, wherein the masking processing and the deciphering processing are conducted by performing EXOR operations.

6. The system of claim 4 or 5, wherein communication between the reader/writer and the electronic tag is wireless communication using electric waves or wireless communication using electromagnetic induction.

## Patentansprüche

1. Datenschreibverfahren zum Schreiben von Schreibdaten in ein elektronisches Etikett (30), indem Kommunikation zwischen einer Lese-/Schreibeinheit (10) und dem elektronischen Etikett durchgeführt wird, wobei in dem Datenschreibverfahren für das elektronische Etikett:
die Lese-/Schreibeinheit dazu gebracht wird, eine Antwortanfrage an das elektronische Etikett zu übertragen (201),
das elektronische Etikett dazu gebracht wird, die Antwortanfrage von der Lese-/Schreibeinheit zu empfangen (202), eine erste Zufallszahl zu erzeugen (203) und zu speichern (204), und die erzeugte erste Zufallszahl an die Lese-/Schreibeinheit zu übertragen (205),
die Lese-/Schreibeinheit dazu gebracht wird, unter Verwendung der ersten Zufallszahl als Anfangswert eine zweite Zufallszahl zu erzeugen (207), eine Maskierungsverarbeitung der Schreibdaten auf Grundlage der zweiten Zufallszahl für die jeweilige Länge der erzeugten zweiten Zufallszahl durchzuführen (208), die Maskierungsverarbeitung zu wiederholen, bis alle Schreibdaten maskiert sind (209), und dann die maskierten Schreibdaten gesammelt an das elektronische Etikett zu übertragen (210), und
das elektronische Etikett dazu gebracht wird, unter Verwendung der gespeicherten ersten Zufallszahl als Anfangswert die gleiche zweite Zufallszahl wie die Lese-/Schreibeinheit zu erzeugen (212), eine Entschlüsselungsverarbeitung der empfangenen maskierten Schreibdaten für die jeweilige Länge der zweiten Zufallszahl durchzuführen (213), die Entschlüsselungsverarbeitung zu wiederholen, bis alle maskierten Schreibdaten entschlüsselt sind (214), und die Schreibdaten in einen Speicher (33) zu schreiben (215),
**dadurch gekennzeichnet, dass**
wenn die Lese-/Schreibeinheit dazu gebracht wird, die Maskierungsverarbeitung zu wiederholen, die Lese-/Schreibeinheit unter Verwendung der ersten Zufallszahl als Anfangswert eine zweite Zufallszahl erzeugt, die jedesmal verschieden ist, und die Maskierungsverarbeitung durchführt, und
wenn das elektronische Etikett dazu gebracht wird, die Entschlüsselungsverarbeitung durchzuführen, das elektronische Etikett unter Verwendung der ersten Zufallszahl als Anfangswert die gleiche zweite Zufallszahl wie die Lese-/Schreibeinheit erzeugt, die jedesmal verschieden ist, und die Entschlüsselungsverarbeitung durchführt.

2. Verfahren nach Anspruch 1, wobei die Maskierungsverarbeitung und die Entschlüsselungsverarbeitung durch Ausführen von EXOR-Operationen durchgeführt werden.

3. Verfahren nach Anspruch 1 oder 2, wobei die Kommunikation zwischen der Lese-/Schreibeinheit und dem elektronischen Etikett in drahtloser Kommunikation unter Verwendung von elektrischen Wellen oder drahtloser Kommunikation unter Verwendung von elektromagnetischer Induktion besteht.

4. System zum Lesen/Schreiben von Daten, das dazu ausgelegt ist, Schreibdaten in ein elektronisches Etikett (30) zu schreiben, indem Kommunikation zwischen einer Lese-/Schreibeinheit (10) und dem elektronischen Etikett durchgeführt wird, wobei das System zum Lesen/Schreiben von Daten aufweist:
das elektronische Etikett (30) mit einem Speicher (33) und einem ersten Zahlengenerator (34); und
die Lese-/Schreibeinheit mit einer Antenne (20) zum Durchführen von Kommunikation und einem zweiten Zahlengenerator (13),
wobei
die Lese-/Schreibeinheit dazu ausgelegt ist, eine Antwortanfrage an das elektronische Etikett zu übertragen (201),
das elektronische Etikett dazu ausgelegt ist, die Antwortanfrage von der Lese-/Schreibeinheit zu empfangen (202), eine erste Zufallszahl in dem ersten Zahlengenerator zu erzeugen (203), die erste Zufallszahl in dem Speicher zu speichern (204), und die erzeugte erste Zufallszahl an die Lese-/Schreibeinheit zu übertragen (205),
die Lese-/Schreibeinheit dazu ausgelegt ist, in dem zweiten Zahlengenerator unter Verwendung der ersten Zufallszahl als Anfangswert eine zweite Zufallszahl zu erzeugen (207), eine Maskierungsverarbeitung der Schreibdaten auf Grundlage der zweiten Zufallszahl für die jeweilige Länge der erzeugten zweiten Zufallszahl durchzuführen (208), die Maskierungsverarbeitung zu wiederholen, bis alle Schreibdaten der Maskierungsverarbeitung unterzogen sind (209), und dann die maskierten Schreibdaten gesammelt an das elektronische Etikett zu übertragen (210), und
das elektronische Etikett dazu ausgelegt ist, in dem ersten Zahlengenerator unter Verwendung der gespeicherten ersten Zufallszahl als Anfangswert die gleiche zweite Zufallszahl wie die Lese-/Schreibeinheit zu erzeugen (212), eine Entschlüsselungsverarbeitung der empfangenen maskierten Schreibdaten für die jeweilige Länge der zweiten Zufallszahl durchzuführen (213), die Entschlüsselungsverarbeitung zu wiederholen, bis alle maskierten Schreibdaten entschlüsselt sind (214), und die Schreibdaten in den Speicher zu schreiben (215),
**dadurch gekennzeichnet, dass**
wenn die Maskierungsverarbeitung wiederholt wird, die Lese-/Schreibeinheit dazu ausgelegt ist, unter Verwendung der ersten Zufallszahl als Anfangswert eine zweite Zufallszahl, die jedesmal verschieden ist, zu erzeugen und die Maskierungsverarbeitung durchzuführen, und
wenn die Entschlüsselungsverarbeitung durchgeführt wird, das elektronische Etikett dazu ausgelegt ist, unter Verwendung der ersten Zufallszahl als Anfangswert die gleiche zweite Zufallszahl wie die Lese-/Schreibeinheit, die jedesmal verschieden ist, zu erzeugen und die Entschlüsselungsverarbeitung durchzuführen.

5. System nach Anspruch 4, wobei die Maskierungsverarbeitung und die Entschlüsselungsverarbeitung durch Ausführen von EXOR-Operationen durchgeführt werden.

6. System nach Anspruch 4 oder 5, wobei die Kommunikation zwischen der Lese-/Schreibeinheit und dem elektronischen Etikett in drahtloser Kommunikation unter Verwendung von elektrischen Wellen oder drahtloser Kommunikation unter Verwendung von elektromagnetischer Induktion besteht.

## Revendications

1. Procédé d'écriture de données d'étiquette électronique pour écrire des données d'écriture dans une étiquette électronique (30) en effectuant une communication entre un dispositif de lecture/dispositif d'écriture (10) et l'étiquette électronique, le procédé d'écriture de données d'étiquette électronique comportant les étapes consistant à :
amener le dispositif de lecture/dispositif d'écriture à transmettre une demande de réponse à l'étiquette électronique (201),
amener l'étiquette électronique à recevoir la demande de réponse en provenance du dispositif de lecture/dispositif d'écriture (202), générer (203) et mémoriser un premier nombre aléatoire (204), et transmettre le premier nombre aléatoire généré au dispositif de lecture/dispositif d'écriture (205),
amener le dispositif de lecture/dispositif d'écriture à générer un second nombre aléatoire en utilisant le premier nombre aléatoire reçu en tant que valeur initiale (207), effectuer un traitement de masquage sur les données d'écriture en se basant sur le second nombre aléatoire pour la longueur respective du second nombre aléatoire généré (208), répéter le traitement de masquage jusqu'à ce que toutes les données d'écriture soient masquées (209), et transmettre ensuite les données d'écriture masquées à l'étiquette électronique collectivement (210), et
amener l'étiquette électronique à générer le même second nombre aléatoire que le dispositif de lecture/dispositif d'écriture en utilisant le premier nombre aléatoire mémorisé en tant que valeur initiale (212), effectuer un traitement de déchiffrement sur les données d'écriture masquées reçues pour la longueur respective du second nombre aléatoire (213), répéter le traitement de déchiffrement jusqu'à ce que toutes les données d'écriture masquées soient déchiffrées (214), et écrire les données d'écriture dans une mémoire (33) (215),
**caractérisé en ce que**
lorsque le dispositif de lecture/dispositif d'écriture est amené à répéter le traitement de masquage, le dispositif de lecture/dispositif d'écriture génère un second nombre aléatoire lequel est différent à chaque fois en utilisant le premier nombre aléatoire en tant que valeur initiale et effectue le traitement de masquage, et
lorsque l'étiquette électronique est amenée à répéter le traitement de déchiffrement, l'étiquette électronique génère le même second nombre aléatoire que le dispositif de lecture/dispositif d'écriture lequel est différent à chaque fois en utilisant le premier nombre aléatoire en tant que valeur initiale et effectue le traitement de déchiffrement.

2. Procédé selon la revendication 1, dans lequel le traitement de masquage et le traitement de déchiffrement sont effectués en exécutant des opérations OU Exclusif.

3. Procédé selon la revendication 1 ou 2, dans lequel la communication entre le dispositif de lecture/dispositif d'écriture et l'étiquette électronique est une communication sans fil utilisant des ondes électriques ou une communication sans fil utilisant une induction électromagnétique.

4. Système de lecture/écriture de données d'étiquette électronique adapté pour écrire des données d'écriture dans une étiquette électronique (30) en effectuant une communication entre un dispositif de lecture/dispositif d'écriture (30) et l'étiquette électronique, le système de lecture/écriture de données d'étiquette électronique comportant :
l'étiquette électronique ayant une mémoire (33) et un générateur de premier nombre aléatoire (34), et
le dispositif de lecture/dispositif d'écriture ayant une antenne (20) pour effectuer une communication et ayant un générateur de second nombre aléatoire (13),
dans lequel
le dispositif de lecture/dispositif d'écriture est adapté pour transmettre une demande de réponse à l'étiquette électronique (201),
l'étiquette électronique est adaptée pour recevoir la demande de réponse en provenance du dispositif de lecture/dispositif d'écriture (202), générer un premier nombre aléatoire (203) dans le générateur de premier nombre aléatoire, mémoriser le premier nombre aléatoire dans la mémoire (204), et transmettre le premier nombre aléatoire généré au dispositif de lecture/dispositif d'écriture (205),
le dispositif de lecture/dispositif d'écriture est adapté pour générer un second nombre aléatoire dans le générateur de second nombre aléatoire en utilisant le premier nombre aléatoire reçu en tant que valeur initiale (207), effectuer un traitement de masquage sur les données d'écriture en se basant sur le second nombre aléatoire pour la longueur respective du second nombre aléatoire généré (208), répéter le traitement de masquage jusqu'à ce que toutes les données d'écriture soient soumises au traitement de masquage (209), et transmettre ensuite les données d'écriture masquées à l'étiquette électronique collectivement (210), et
l'étiquette électronique est adaptée pour générer le même second nombre aléatoire dans le générateur de premier nombre aléatoire que le dispositif de lecture/dispositif d'écriture en utilisant le premier nombre aléatoire mémorisé en tant que valeur initiale (212), effectuer un traitement de déchiffrement sur les données d'écriture masquées reçues pour la longueur respective du second nombre aléatoire (213), répéter le traitement de déchiffrement jusqu'à ce que toutes les données d'écriture masquées soient déchiffrées (214), et écrire les données d'écriture dans la mémoire (215),
**caractérisé en ce que**
lors de la répétition du traitement de masquage, le dispositif de lecture/dispositif d'écriture est adapté pour générer un second nombre aléatoire lequel est différent à chaque fois en utilisant le premier nombre aléatoire en tant que valeur initiale et effectuer le traitement de masquage, et
lors de la répétition du traitement de déchiffrement, l'étiquette électronique est adaptée pour générer le même second nombre aléatoire que le dispositif de lecture/dispositif d'écriture qui est différent à chaque fois en utilisant le premier nombre aléatoire en tant que valeur initiale et effectuer le traitement de déchiffrement.

5. Système selon la revendication 4, dans lequel le traitement de masquage et le traitement de déchiffrement sont effectués en exécutant des opérations OU Exclusif.

6. Système selon la revendication 4 ou 5, dans lequel la communication entre le dispositif de lecture/dispositif d'écriture et l'étiquette électronique est une communication sans fil utilisant des ondes électriques ou une communication sans fil utilisant une induction électromagnétique.
